# EUROPÄISCHE PATENTSCHRIFT

(11) **EP 3 010 704 B1**
(45) Veröffentlichungstag und Bekanntmachung des Hinweises auf die Patenterteilung: **22.07.2020**
(21) Anmeldenummer: 14747804.4
(22) Anmeldetag: 16.06.2014
(51) Int. Cl.: B29C 70/78, B22F 3/105, B29C 67/00, B44B 5/02, B44C 3/02

(54) **VERFAHREN UND VORRICHTUNG ZUR HERSTELLUNG EINER DREIDIMENSIONALEN OBERFLÄCHENSTRUKTUR EINES PRESSWERKZEUGES**
METHOD AND DEVICE FOR PRODUCING A THREE-DIMENSIONAL SURFACE STRUCTURE OF A PRESSING TOOL
PROCÉDÉ ET DISPOSITIF PERMETTANT DE PRODUIRE UNE STRUCTURE DE SURFACE TRIDIMENSIONNELLE D'UN OUTIL DE COMPRESSION

(30) Priorität: 19.06.2013 DE 102013010160
(43) Veröffentlichungstag der Anmeldung: 27.04.2016
(73) Patentinhaber: HUECK Rheinische GmbH, 41747 Viersen (DE)
(72) Erfinder: STOFFEL, Wolfgang, 47906 Kempen (DE)
(74) Vertreter: Burger, Hannes
(86) Internationale Anmeldenummer: PCT/DE2014/000304
(87) Internationale Veröffentlichungsnummer: WO 2014/202041

(56) Entgegenhaltungen:
- EP-A2- 1 629 934
- EP-A2- 2 060 658
- EP-A2- 2 412 516
- WO-A1-2004/009364

## Beschreibung

Die Erfindung betrifft ein Verfahren zur Herstellung einer Oberflächenstruktur eines Presswerkzeuges, insbesondere Pressblech oder Endlosband, zum Verpressen von Werkstoffplatten, Kunststofffolien, Trennfolien, PVC-Oberflächen, LVT (luxury vinyl tiles), Scheckkarten, Pässe, Kreditkarten oder Plastikkarten.

Werkstoffplatten, beispielsweise Holzwerkstoffplatten, werden für die Möbelindustrie und für den Innenausbau, beispielsweise für Laminatfußböden benötigt. Die Werkstoffplatten weisen einen Kern aus MDF oder HDF auf, wobei zumindest einseitig verschiedene Materialauflagen aufgelegt werden, beispielsweise eine Dekorlage und eine Schutzschicht (Overlay-Schicht). Um einen Verzug der hergestellten Werkstoffplatten zu vermeiden, werden in der Regel auf beiden Seiten der Werkstoffplatte eine gleiche Anzahl von Materialauflagen verwendet, wobei in einer Presse die Werkstoffplatte unter Verwendung von Pressblechen oder Endlosbändern miteinander verpresst werden und gleichzeitig eine Oberflächenprägung erfolgt. Es handelt sich in der Regel um Heißpressen, um die verschiedenen Materialauflagen aus Duroplastharzen, beispielsweise Melaminharz, unter Wärmeeinwirkung durch eine Verschmelzung der Kunststoffmaterialien mit der Oberfläche des Kerns zu verbinden.

Durch die Dekorschichten kann hierbei Einfluss auf das Muster und die Farbgestaltung und durch die Pressbleche oder Endlosbänder auf die Oberflächenstrukturierung genommen werden. Beispielsweise kann ein Holz- oder Fliesendekor auf dem Dekorpapier aufgedruckt sein, oder es werden Strukturen verwendet, welche entsprechend dem jeweiligen Verwendungszweck künstlerisch gestaltet sind. Hierbei können die Dekorpapiere ebenfalls aus einer Overlay-Schicht bestehen, die auf der Ober- oder Unterseite einen Druck aufweist.

Zur Verbesserung einer naturgetreuen Nachbildung, insbesondere bei Holzdekoren, Fliesendekoren oder Natursteinoberflächen, werden die Pressbleche oder Endlosbänder mit einer Oberflächenstruktur versehen, die deckungskonform zu der Dekorschicht ausgebildet ist und eine Negativabbildung der vorgesehenen Oberflächenstruktur aufweisen. Aus diesem Grunde weisen die Pressblech- oder Endlosbänder eine Tiefenstrukturierung auf, die beispielsweise den Holznerven einer aus der Dekorschicht ersichtlichen Holzoberfläche entsprechen. Bei anderen Dekorschichten kann die Tiefenstrukturierung ebenfalls deckungskonform ausgebildet sein. Ferner besteht die Möglichkeit, die Pressbleche oder Endlosbänder mit einer geringen Strukturierung herzustellen, um eine größere partielle Flächenpressung vorzunehmen, ohne dass tiefe Strukturen ausgebildet sind.

Zur weiteren Verbesserung einer naturgetreuen Nachbildung, insbesondere bei Holzdekoren, Fliesendekoren oder Natursteinoberflächen, werden Pressbleche oder Endlosbänder eingesetzt, die zudem über bestimmte Glanzgrade verfügen. Mithilfe einer digitalisierten Drucktechnik für die Dekorpapiere und digitalisierten Herstellung der Pressblechoberflächen wird hierbei eine hohe Deckungskonformität erreicht, welche aufgrund einer passgenauen Ausrichtung einer natürlichen Holzpaneele oder vergleichbarer Materialien sehr nahe kommt. Durch die Einstellung eines bestimmten Glanzgrades wird zudem die Möglichkeit geschaffen, eventuelle Reflektionen oder Schattierungen zu erzeugen, die für einen Betrachter den Eindruck einer natürlichen Holzoberfläche oder anderer Materialien vermitteln.

Zur Erzielung der deckungskonformen Prägung der Werkstoffplatten wird für die Produktion der Pressbleche und Endlosbänder ein hoher Qualitätsstandard gefordert, welcher insbesondere eine passgenaue Fertigung mit den vorgesehenen Dekorlagen vorsieht. Die Pressbleche oder Endlosbänder werden hierbei als Ober- und Unterwerkzeug in Kurztaktpressen, welche mit Pressblechen belegt sind, oder Doppelbandpressen bei Endlosbändern eingesetzt, wobei gleichzeitig die Prägung und Erwärmung der Overlay-Schichten vorgenommen wird, sodass die Duroplastharze durch Aufschmelzen und Aushärten mit dem Kern verbunden werden können.

Die zur Verfügung stehenden digitalisierten Daten einer Dekorvorlage werden hierbei dazu verwendet, um ein Ätzresist für die Strukturierung der Pressbleche oder Endlosbänder aufzubringen. Zu diesem Zweck wird ein Ätzresist auf die Pressbleche oder Endlosbänder beispielsweise mithilfe eines Digitaldruckers aufgetragen, um anschließend einen Ätzprozess vorzunehmen. Nach Entfernen des Ätzresists kann eine Weiterverarbeitung erfolgen, wobei vorzugsweise bei besonders tiefen Oberflächenstrukturierungen mehrere Ätzvorgänge hintereinander vorgenommen werden können. Hierzu wird auf das bereits geätzte Pressblech oder Endlosband wiederum ein Ätzresist aufgetragen und eine erneute Ätzung durchgeführt, bis die gewünschte Tiefenstruktur erreicht wurde. Bei den einzelnen Ätzprozessen kann darüber hinaus eine Grob- oder Feinstrukturierung vorgenommen werden, je nachdem welches Motiv den Dekorlagen zugrunde liegt. Die beschriebene Herstellung des Ätzresists basiert auf der neuesten Technologie, während bei früheren Herstellungen des Ätzresists beispielsweise ein Siebdruckverfahren angewendet wurde, bevor der Ätzvorgang erfolgt.

Sowohl nach den neuen als auch den älteren Herstellungsverfahren werden auf die Bleche ein Ätzresist aufgetragen, um durch die abgedeckten Bereiche des Ätzresists die erhabenen Oberflächenstrukturen nachzubilden, während die Zwischenräume eine Oberflächenätzung erfahren. Die geätzten Bereiche bilden hierbei die Profiltäler der gewünschten Struktur, welche als Negativform entsteht. Nach jeder Ätzung wird die Oberfläche gereinigt gegebenenfalls eine neue Maske aufgetragen, sodass weitere Ätzungen folgen können oder durch weitere Arbeitsvorgänge die Oberfläche einem weiteren Vergütungsprozess, beispielsweise einer Hartverchromung, Glanzgradeinstellung etc. unterzogen werden kann.

Die Auftragung des Ätzresists mithilfe eines Siebdruckverfahrens oder der digitalen Drucktechnik mit anschließender Ätzung ist relativ zeitaufwändig, sodass die Herstellung der Pressbleche mit hohen Kosten verbunden ist.

Die EP 2 060 658 A2 offenbart ein solches Verfahren zum Herstellen eines Pressblechs mit einer strukturierten Oberfläche, die durch Auftragen einer Maske und Ätzen hergestellt wird.

Soweit insbesondere Werkstoffplatten verpresst werden sollen, werden großformatige Presswerkzeuge in Form von Pressblechen oder Endlosbändern eingesetzt, welche zumindest eine Kantenlänge von mehr als einem Meter aufweisen.

Ferner können die Presswerkzeuge auch zum Verpressen von Kunststofffolien, Trennfolien, PVC-Oberflächen, LVT verwendet werden, wobei die Größe der Presswerkzeuge an die Endprodukte angepasst wird. Daneben besteht die Möglichkeit, mithilfe der Presswerkzeuge Scheckkarten, Pässe, Kreditkarten oder Plastikkarten zu verpressen, wobei in diesem Fall in der Regel die sicherheitsrelevanten Merkmale von Bedeutung sind. Soweit die sicherheitsrelevanten Merkmale auf den Dekorschichten aufgebracht sind, erfolgt eine Verpressung in der Regel mit einem glatten oder leicht strukturierten Presswerkzeug. Alternativ besteht durchaus die Möglichkeit, sicherheitsrelevante Merkmale der Dekorlage zusätzlich in die Oberfläche mithilfe der Presswerkzeuge einzuprägen.

Die EP 1 629 943 A2 offenbart ein Verfahren zur Herstellung einer Schneid- oder Prägewalze mittels Laserauftragsschweißen.

Der vorliegenden Erfindung liegt die Aufgabe zugrunde, ein neuartiges Verfahren aufzuzeigen, mit dem die Strukturoberfläche der Presswerkzeuge umweltfreundlich hergestellt werden kann und eine Rationalisierung der Herstellung ermöglicht.

Erfindungsgemäß ist zur Lösung der Verfahrensaufgabe vorgesehen, dass die Herstellung einer Oberflächenstruktur eines Presswerkzeugs, insbesondere eines Pressbleches oder Endlosbandes mithilfe eines 3D-Schichtaufbaus erfolgt, wobei das Verfahren folgende Schritte umfasst:
- Bereitstellung und Verwendung von digitalisierten Daten einer 3D-Topografie einer Oberflächenstruktur,
- Erstellen von digitalisierten Daten einzelner 2D-Schichten der 3D-Topografie,
- Verwendung der digitalisierten Daten der 2D-Schichten, um einen Bearbeitungskopf zu führen, und/oder in einer xy-Ebene zu positionieren, oder zur Nachführung eines Arbeitstisches in einer durch eine x-und y-Koordinate aufgespannten Ebene gegenüber einem ortsfest gehaltenen Bearbeitungskopf, um ein Schichtmaterial mit einem vorhandenen Trägermaterial oder einer bereits fertiggestellten Schicht in Abhängigkeit der digitalisierten Daten der 2D-Schichten zu verbinden, wobei die Oberflächenstruktur unabhängig eines sich wiederholenden Rapports in Teilbereiche unterteilt wird, welche jeweils sequenziell bearbeitet werden oder zumindest teilweise von mehreren Bearbeitungsköpfen parallel bearbeitet werden, und/oder dass die Grenzen der Teilbereiche freiwählbar sind und/oder dass die festgelegten Teilbereiche in Abhängigkeit des verwendeten Bearbeitungskopfes eine Kantenlänge von 10 cm bis 100 cm aufweisen.

Weitere vorteilhafte Ausgestaltungen der Erfindung sind in den Unteransprüchen offenbart.

Die Herstellung der Pressbleche oder Endlosbänder soll nach dem neuen Verfahren mithilfe eines 3D-Schichtaufbaus erfolgen. Zu diesem Zweck werden bereitgestellte digitalisierte Daten einer 3D-Topografie herangezogen, um mithilfe der 3D-Topografie digitalisierte Daten einzelner 2D-Schichten herzustellen. Die Anzahl der 2D-Schichten hängt hierbei von der gewünschten Strukturtiefe, das heißt vom höchsten bis zum tiefst gelegenen Punkt der zu erzeugenden Struktur ab. In der Regel werden zur Herstellung einer Oberflächenstrukturierung bei Pressblechen oder Endlosbändern mithilfe der Ätztechnik eine Tiefenstrukturierung von 80 µ erzielt. In einzelnen Fällen kann sich diese Struktur aber bis zu einer Tiefe von 400 µ erstrecken. Ähnlich verhält es sich bei der Herstellung von Pressblechen oder Endlosbändern mithilfe eines 3D-Schichtaufbaus. Je höher die spätere Eindringtiefe der Presswerkzeuge erfolgen soll, umso höher muss die Differenz zwischen dem tiefsten und dem höchsten Punkt gewählt werden, sodass im Einzelfall eine Vielzahl von einzelnen 2D-Schichten mithilfe eines Bearbeitungskopfes hergestellt werden muss.

Mithilfe der digitalisierten Daten der 2D-Schichten besteht die Möglichkeit, einen Bearbeitungskopf zu führen, und/oder in einer xy-Ebene zu positionieren, oder zur Nachführung eines Arbeitstisches in der durch eine x- und y-Koordinate aufgespannten Ebene gegenüber einem ortsfest gehaltenen Bearbeitungskopf vorzunehmen, um ein Schichtmaterial mit einem vorhandenen Trägermaterial oder einer bereits fertiggestellten Schicht in Abhängigkeit der digitalisierten Daten der 2D-Schichten zu verbinden. Durch den Bearbeitungskopf wird in Abhängigkeit des verwendeten Schichtmaterials ein ausgewählter Oberflächenbereich derart bearbeitet, dass sich das Schichtmaterial mit dem vorhandenen Untergrund, sei es ein Trägermaterial oder eine bereits fertiggestellte Schicht, verbindet. Je nachdem, welcher Bearbeitungskopf eingesetzt wird, kann eine Führung, beispielsweise eines Laserstrahls oder eines Elektronenstrahls erfolgen. Im Falle eines druckähnlichen Bearbeitungskopfes kann dieser über dem Presswerkzeug in einer x-y-Ebene bewegt werden, wenn der Arbeitstisch feststeht. Alternativ kann der Arbeitstisch in einer x-y-Ebene bewegt werden, wenn in besonderen Anwendungsfällen der Bearbeitungskopf in einer festen Position gehalten wird. Dies schließt aber nicht aus, dass zur schnellen Bearbeitung sowohl der Bearbeitungskopf als auch der Arbeitstisch bewegt werden kann. Bei einem feststehenden Arbeitstisch können beispielsweise mehrere unabhängige Bearbeitungsköpfe eingesetzt und bewegt werden. Somit besteht die Möglichkeit, mithilfe der zur Verfügung gestellten digitalisierten Daten der 2D-Schichten eine Steuerung des Bearbeitungskopfes vorzunehmen, wobei im Wesentlichen die Umrisse der herzustellenden Oberflächenstruktur abgefahren werden, um eine Verbindung mit dem neu aufgetragenen Schichtmaterial herzustellen.

Durch die digitalisierten Daten besteht hierbei die Möglichkeit einer exakten Steuerung des Bearbeitungskopfes, sodass eine nahezu identische Reproduktion der Oberflächenstruktur mehrfach vorgenommen werden kann, oder es können mehrere Schichten gegebenenfalls stufenförmig übereinander angeordnet werden. Hierzu besteht lediglich die Notwendigkeit, digitalisierte Daten einer 3D-Topografie zur Verfügung zu stellen, welche die abgeformte natürliche Oberflächenstruktur wiedergeben. Die aus den digitalisierten Daten der 3D-Topografie berechneten 2D-Schichten werden dann zur Steuerung des Bearbeitungskopfes in der Ebene verwendet, die durch eine x- und y-Koordinate aufgespannt wird, sodass mithilfe der digitalisierten Daten der Bearbeitungskopf in eine bestimmte Position verfahren werden kann. Hierdurch besteht die Möglichkeit, mithilfe des Bearbeitungskopfes eine partielle Schichtenanordnung aufzutragen, um die gewünschte Oberflächenstrukturierung nachzubilden.

Der besondere Vorteil der vorliegenden Erfindung besteht darin, dass das Verfestigen des Schichtmaterials mit hoher gleichbleibender Genauigkeit erfolgt und somit Fehlstellen oder unerwünschte Überlappungen der Strukturen vermieden werden können. Durch das erfindungsgemäße Verfahren kann hierbei sowohl eine Grobstrukturierung der Oberfläche, aber ebenso eine Feinstrukturierung der Oberfläche vorgenommen werden, sodass ein Ätzvorgang gegebenenfalls vollständig entbehrlich ist. Ein weiterer wesentlicher Vorteil besteht dadurch, dass die digitalisierten Daten eine Reproduzierbarkeit der Oberfläche beliebig oft ermöglichen und dies ohne aufwändige Kontrollmaßnahmen, wodurch eine Überwachungstätigkeit des Bedienungspersonals auf ein Minimum beschränkt werden kann. Als weiterer besonderer Vorteil ist anzuführen, dass umweltbelastende nach dem Stand der Technik angewendete Ätzverfahren weitestgehend vermieden werden können. Die vorgenannte Vorgehensweise ist insbesondere für die Herstellung von großformatigen Presswerkzeugen, wie Pressbleche oder Endlosbänder, von Vorteil. Großformatige Presswerkzeuge bedeuten in diesem Fall ein Presswerkzeug mit zumindest einer Kantenlänge von mehr als einem Meter. Typischerweise werden Pressbleche in einer Größenordnung von 3 x 6 Metern hergestellt.

Für den Schichtaufbau wird ein Schichtmaterial verwendet, welches in fester, flüssiger, pastöser, gasförmiger oder pulverförmiger Form vorliegt, wobei eine Verfestigung mit dem vorhandenen Trägerkörper bzw. früher aufgetragenen Schichten mithilfe des Bearbeitungskopfes erfolgt. Im Falle von flüssigem oder pastösem Schichtmaterial könnte man somit von einem 3D-Druck ausgehen.

In weiterer Ausgestaltung des Verfahrens ist vorgesehen, dass der Bearbeitungskopf zur Erzeugung von elektromagnetischer Strahlung vorgesehen ist, wobei insbesondere Infrarotstrahlung oder Laserlicht mit einer oder zwei Wellenlängen verwendet wird, und/oder dass der Bearbeitungskopf einen Elektronenstrahl aussendet. Mithilfe der elektromagnetischen Strahlung oder eines Elektronenstrahls wird das aufgetragene Schichtmaterial verfestigt, wobei der Bearbeitungskopf aus einer Infrarotlampe, einer UV-Lampe, einem Laser oder einer Elektronenstrahlquelle bestehen kann.

Soweit ein Elektronenstrahl für den Bearbeitungskopf verwendet wird, kann dieser durch einen zumindest teilweise ortsfest angeordneten Bearbeitungskopf ähnlich wie bei einem Röhrenfernseher abgelenkt werden, wobei die digitalisierten Daten der 2D-Schichten herangezogen werden.

Je nach Art des verwendeten Bearbeitungskopfes können hierbei unterschiedliche Schichtmaterialien zum Einsatz kommen, beispielsweise Metalle, wie Eisen, Gold, Kupfer, Titan etc. oder Kunststoffe, wie ABS und Harze oder ein Pulver. Die Verbindung der Schichtmaterialien kann beispielsweise durch Sintern oder Polymerisieren mit hoher Auflösung auf einem Trägermaterial erfolgen, die bis zum Nanometerbereich möglich ist. Bei dem Trägermaterial handelt es sich um ein Presswerkzeug, beispielsweise ein Pressblech oder Endlosband.

Der dreidimensionale Schichtaufbau kann zum Beispiel mit festen, flüssigen oder gasförmigen Materialien erfolgen, die teilweise schichtweise aufgetragen und verfestigt werden, wobei bei flüssigen Materialien das Polymerisieren im Vordergrund steht, während bei gasförmigen Materialien auf eine chemische Reaktion abgestellt wird. Bei den festen Materialien können Drähte, Ein- und Mehrkomponentenpulver sowie Folien verwendet werden. Soweit man von festen Materialien ausgeht, beispielsweise einem Draht, kann dieser aufgeschmolzen werden und auf dem Trägerkörper erstarren. Ein- oder Mehrkomponentenpulver werden durch einen Binder verfestigt oder zum Aufschmelzen mit anschließendem Erstarren verwendet, wobei in diesem Fall Laser nach dem "selektiven laser sintering" (SLS) eingesetzt werden. Soweit Folien verwendet werden, können diese durch Ausschneiden und Fügen bzw. Polymerisieren mit dem Trägerkörper verfestigt werden. Im Anschluss werden die Reste der Folie entfernt und das Verfahren wird mit zumindest einer weiteren Folie festgesetzt. Flüssige Materialien werden vorzugsweise polymerisiert, wobei dies mithilfe von Wärme, Licht zweier Wellenlängen oder Licht einer Wellenlänge erfolgt. Licht einer Wellenlänge kann beispielsweise von einer Lampe, einem Laserstrahl oder mittels Holografie zum Einsatz kommen.

Ein bekanntes Verfahren ist das Additive Layer manufacturing, bei dem Pulver als Grundlage für den dreidimensionalen Schichtaufbau, beispielsweise durch einen 3D-Druck, verwendet wird. Ein solcher 3D-Drucker verfügt über einen oder mehrere Druckköpfe, die dabei ähnlich wie bei einem herkömmlichen Tintenstrahldrucker funktionieren. Anstelle von Tinte kann über die Druckköpfe jedoch ein flüssiger Klebstoff (Bindemittel) auf die Pulverschicht aufgetragen werden. Als Grundlage dienen hierzu die 2D-Schichten einer 3D-Topografie. Beim 3D-Druck mit Pulver wird auf die unterste Lage über einen beweglichen Druckkopf der flüssige Klebstoff auf die Pulverschicht aufgetragen. Der 3D-Drucker zeichnet hierbei ein 2D-Bild der ersten Lage auf das Trägermaterial mit Pulverschicht und verklebt so die einzelnen Materialpartikel miteinander auf dem Trägermaterial. Danach wird automatisch eine neue, hauchdünne Pulverschicht über die erste Schicht gezogen und der Vorgang wiederholt sich mit der zweiten Schicht. Auf diese Weise wird Schicht für Schicht aufgetragen, bis die gewünschte 3D-Topografie entstanden ist. Damit die 3D-Struktur von unten nach oben wachsen kann, wird die Pulverschicht jeweils auf die verfestigte Schicht aufgetragen. Die Materialmenge wird dabei so berechnet, dass sich die Schichten untereinander verbinden, insbesondere verkleben. Das Pulver und der Kleber können aus unterschiedlichen Materialien bestehen. Beispielsweise können Kunststoffpulver oder Keramikglas und andere pulverförmige Materialien verarbeitet werden. Bei dieser Vorgehensweise handelt es sich um die einfachste Möglichkeit, einen dreidimensionalen Schichtaufbau zu erzielen.

Für das vorgesehene Verfahren zur Herstellung von Pressblechen oder Endlosbändern kommt vorzugsweise ein Sinterverfahren (selective laser sinting; SLS) infrage. In diesem Fall werden metallische Pulvermaterialien verarbeitet, die im Unterschied zum 3D-Druck nicht mit einem flüssigen Kunststoff verbunden, sondern mithilfe eines Hochleistungslasers verschmolzen werden. Damit lassen sich neben Kunststoffen auch Metalle, Keramiken und Sand verarbeiten.

Ein weiteres Sinter-Verfahren (selective laser melting; SLM) wird ebenfalls mithilfe von pulverförmigen Materialien und einem Laser durchgeführt, wobei die pulverförmigen Materialien verschmolzen, das heißt vollständig aufgeschmolzen werden, sodass eine sehr hohe Dichte der produzierten Oberflächenstruktur erreicht werden kann. Beim Elektronenstrahlschmelzen (electronic beam melting; EBM) werden nach einem ähnlichen Prinzip pulverförmige Metalle über einen gut steuerbaren Elektronenstrahl miteinander verschmolzen, wobei die Steuerung des Elektronenstrahls einfach handhabbar ist und eine hohe Auflösegenauigkeit erzielt wird.

Im Weiteren kommt der 3D-Druck mittels geschmolzener Materialien (fuse deposition modelling; FDM) infrage. Hierbei handelt es sich um die populärsten Methoden des Druckens mit geschmolzenen Materialien, wobei vor allem Kunststoffe wie ABS oder PLA für einen 3D-Druck mit flüssigen Materialien eingesetzt werden, vorzugsweise können flüssige UVempfindliche Kunststoffe (Photopolymere) eingesetzt werden. Bekannt ist hier die Stereolytografie (STL; SALA). Bei dieser Vorgehensweise wird ein flüssiges Epoxidharz in ein Becken gefüllt, wobei dieser spezielle Kunststoff die besondere Eigenschaft besitzt, dass er nach einer gewissen Zeit durch Belichtung erstarrt. Um damit ein 3-dimensionales Objekt zu erzeugen, werden die einzelnen Lagen eines 3D-Modells mithilfe eines Lasers auf die Oberfläche des flüssigen Materials projiziert, sobald die erste Schicht erstarrt ist, wird der Trägerkörper um die Höhe eines Schichtaufbaus nach unten bewegt, damit sich darüber wieder flüssiges Harz oder Kunststoff sammeln oder mithilfe eines mechanischen Armes aufgetragen werden kann. Danach wird die nächste Schicht projiziert und das flüssige Harz, beispielsweise Epoxidharz verfestigt. Nach Beenden des Schichtaufbaus wird das nicht vollständig gehärtete Objekt aus dem Bad genommen und oft in einer eigenen Belichtungskammer bis zur vollständigen Aushärtung nachbelichtet. Weitere Verfahren sind das digital light processing (DLP) und multi jet modelling (MJM). Alternativ besteht die Möglichkeit, das film transer inejing Verfahren (FTI) anzuwenden, wobei eine Transportfolie einen lichtempfindlichen Kunststoff aufnimmt, welcher mittels des Bearbeitungskopfes entsprechend der gewünschten Struktur ausgehärtet wird.

Von den vorgenannten Verfahren empfiehlt sich für die Herstellung von Pressblechen vorzugsweise das Sintern, weil in diesem Fall Metalle schichtweise aufgebaut werden können, die von sich aus über eine ausreichende Formfestigkeit verfügen. Es können aber ebensogut Kunststoffmaterialien verwendet werden, die auf dem metallischen Trägerkörper aufgeschmolzen werden. Vor der elektrolytischen Metallabscheidung muss das elektrisch nichtleitende Kunststoffmaterial auf der Trägerfläche mit einer elektrisch leitenden Schicht versehen werden. Das kann beispielsweise durch Aufspritzen einer silberhaltigen Lösung oder einer ein Reduktionsmittel enthaltenden Lösung geschehen. Das mit dem Silberniederschlag versehene Kunststoffmaterial wird dann in einem galvanischen Bad behandelt, derart, dass sich auf der strukturierten Trägerfläche eine Metallschicht aus einem NE-Metall, zum Beispiel Kupfer, Nickel oder Messing abscheidet. Im Anschluss daran kann eine Chromschicht mit zumindest einem Glanzgrad aufgetragen werden.

Zur exakten Bearbeitung der herzustellenden Oberflächenstruktur auf dem Trägermaterial ist vorgesehen, dass die Nachführung des Bearbeitungskopfes in einem Abstand von 1 cm bis 20 cm gegenüber der Oberfläche erfolgt. Hierbei ist im Weiteren vorgesehen, dass der Bearbeitungskopf in Abhängigkeit einer sich ergebenden Abstandsänderung, beispielsweise aufgrund von geringen Unebenheiten des Trägermaterials, zwischen Oberfläche und Bearbeitungskopf automatisch nachgeführt wird. Hierdurch wird erreicht, dass bei ansonsten gleichbleibenden Steuerungsdaten des Bearbeitungskopfes die Breite der zu bearbeitenden Fläche aufgrund eines sich ändernden Abstandes nicht verändert wird.

In weiterer Ausgestaltung des Verfahrens ist vorgesehen, dass vorzugsweise die Verwendung von digitalisierten Daten einer Oberflächenstruktur von natürlich gewachsenen Rohstoffen, wie beispielsweise Holzoberflächen, oder natürlicher Mineralien, insbesondere Natursteinoberflächen, oder künstlich hergestellter Strukturen, beispielsweise keramische Oberflächen, zugrunde gelegt wird. Mithilfe des dreidimensionalen Schichtaufbaus können somit sämtliche gewünschten Oberflächenstrukturen auf die Pressbleche oder Endlosbänder aufgetragen werden, um diese anschließend zum Verpressen von Werkstoffplatten einzusetzen. Soweit mithilfe der Presswerkzeuge Kunststofffolien, Trennfolien, PVC-Oberflächen oder LVT verpresst werden sollen, können diese ebenfalls auf natürlichen Oberflächenstrukturen oder künstlichen Oberflächenstrukturen basieren. Soweit Scheckkarten, Pässe, Kreditkarten oder sonstige Plastikkarten verpresst werden, stehen in der Regel sicherheitsrelevante Merkmale im Vordergrund, die entweder durch eine äußere Verpressung nur auf der Dekorschicht aufgebracht sind oder ggf. ebenso mithilfe des Presswerkzeuges in die äußerste Schicht zusätzlich eingepresst werden können. In diesem Fall kann es sich um Holzabzeichen, Firmenkennzeichnungen oder besondere grafische Symbole handeln.

In weiterer Ausgestaltung des Verfahrens ist die Verwendung eines 3D-Scanners zur Erfassung der Oberflächenstruktur und Berechnung von digitalisierten Daten zur Festlegung einer 3D-Topografie vorgesehen, welcher mithilfe umlenkbarer Spiegel die gesamte Oberfläche der Vorlagen naturgetreu scannt, oder durch Abtasten der gesamten Oberflächenstruktur mithilfe eines durch zumindest einen Spiegel umgelenkten Laserstrahls und der hieraus erhaltenen Reflektionen erfasst. Ebenso könnte ein 3D-Mikroskop eingesetzt werden, welches zusätzlich ausreichende und verbesserte Daten der Tiefenstruktur liefert. Alternativ können Graustufenabbildungen einer Oberflächenstruktur verwendet werden. Die hierdurch gewonnenen digitalisierten Daten der 3D-Topografie werden anschließend in die 2D-Schichtstruktur konvertiert, sodass der Bearbeitungskopf angesteuert werden kann.

Um die Erfassung der vorliegenden digitalisierten 3D-Daten und insbesondere die Weiterverarbeitung zu vereinfachen, ist in weiterer Ausgestaltung des Verfahrens vorgesehen, dass eine Konvertierung der digitalen 3D-Daten, insbesondere durch Interpolation und Datenreduktion zur Ermittlung der digitalisierten Daten der 2D-Schichten und Steuerung des Bearbeitungskopfes vorgenommen wird.

Für den dreidimensionalen Schichtaufbau zur Oberflächenstrukturierung kann vorzugsweise vorgesehen sein, dass die Oberflächenstruktur unabhängig eines sich wiederholenden Rapports in Teilbereiche unterteilt wird, welche jeweils sequenziell bearbeitet werden oder zumindest teilweise von mehreren Bearbeitungsköpfen parallel bearbeitet werden. Die Grenzen der Teilbereiche sind hierbei frei wählbar und werden vorzugsweise in der Art festgelegt, dass die Grenzen mit unbearbeiteten Bereichen der Oberfläche zusammenfallen, sodass Ungenauigkeiten, die technisch bedingt sind, bei der Oberflächenstrukturierung nicht in Erscheinung treten. In Abhängigkeit des verwendeten Bearbeitungskopfes können die festgelegten Teilbereiche eine Kantenlänge von 10 cm bis 100 cm, vorzugsweise 50 cm, aufweisen.

Bei der Anwendung des Verfahrens ist im Weiteren vorgesehen, dass die Laserstrahlen eines Lasers oder eines Elektronenstrahls einer Elektronenstrahlquelle unter einem Winkel zur Senkrechten (z-Koordinate) auf die Oberfläche auftreffen. Hierbei ist eine Fokussierung des Laser- oder Elektronenstrahls auf einen Durchmesser von 2 nm bis 10 nm möglich.

Um technisch bedingte Unterbrechungen der Oberflächenstrukturierung, das heißt Auftragen des verwendeten Schichtmaterials vornehmen zu können und eine weitere Bearbeitung im Anschluss durchzuführen, ist in weiterer vorteilhafter Ausgestaltung des Verfahrens vorgesehen, dass auf der Oberfläche Messpunkte vorgesehen sind, welche eine jederzeitige Kontrolle der Position des Bearbeitungskopfes erlauben, sodass eine Korrektursteuerung erfolgen kann und der Bearbeitungskopf exakt in der Position seine Arbeit wieder aufnehmen kann, wo diese zuvor unterbrochen worden ist.

Die fertig gestellten Pressbleche oder Endlosbänder können nach erfolgter Strukturierung weiteren Behandlungsverfahren unterzogen werden. Beispielsweise können mehrere Chromschichten mit unterschiedlichen Glanzgraden aufgetragen werden, wobei zunächst eine vollflächige Verchromung erfolgt und entweder die erhabenen oder die tieferliegenden Bereiche der Oberflächenstrukturierung mit einer Maske abgedeckt werden, um im Anschluss zumindest eine zweite Verchromungsschicht aufzutragen. Alternativ besteht die Möglichkeit, den Glanzgrad durch Glanzbäder, mechanische Nachbehandlung oder Oberflächenätzung zu beeinflussen. Nach Beendigung dieser weiteren Verfahrensschritte ist das Pressblech oder Endlosband fertiggestellt und für den vorgesehenen Einsatzzweck verwendbar.

Der vorliegenden Erfindung liegt weiterhin die Aufgabe zugrunde, eine Vorrichtung aufzuzeigen, mit der ein dreidimensionaler Schichtaufbau auf großformatigen Pressblechen oder Endlosbändern nach dem erfindungsgemäßen Verfahren aufgetragen werden kann.

Erfindungsgemäß wird die Vorrichtungsaufgabe dadurch gelöst, dass die Vorrichtung zumindest eine Auflageeinrichtung für die zu bearbeitenden Materialien, zumindest einen Bearbeitungskopf und eine Schlittenführung zur Führung und/oder Bewegung des Bearbeitungskopfes in eine beliebige Position oder Nachführung eines Arbeitstisches innerhalb einer durch eine x- und y-Koordinate aufgespannten Ebene, sowie unabhängige Antriebselemente zum Anfahren der Position und einer Steuereinheit, welche zur Führung, Positionierung und Steuerung des Bearbeitungskopfes oder des Arbeitstisches vorgesehen ist, umfasst. Hierbei erfolgt die Ansteuerung der x- und y-Koordinaten durch die digitalisierten Daten einzelner 2D-Schichten der 3D-Topografie, wobei mithilfe des wenigstens einen Bearbeitungskopfes das verwendete Schichtmaterial verfestigt wird, wobei die Vorrichtung zusätzlich dazu ausgelegt ist, die Oberflächenstruktur unabhängig eines sich wiederholenden Rapports in Teilbereiche zu unterteilen und diese jeweils sequenziell zu bearbeiten oder zumindest teilweise von mehreren Bearbeitungsköpfen parallel zu bearbeiten, und/oder dass die Vorrichtung dazu ausgelegt ist, dass die Grenzen der Teilbereiche freiwählbar sind und/oder dass die Vorrichtung dazu ausgelegt ist, dass die festgelegten Teilbereiche in Abhängigkeit des verwendeten Bearbeitungskopfes eine Kantenlänge von 10 cm bis 100 cm aufweisen.

Die zur Anwendung des Verfahrens vorgesehene Vorrichtung besteht zunächst aus einer Auflageeinrichtung, auf der die Pressbleche oder Endlosbänder gelagert werden können. Aufgrund der Größe der zu bearbeitenden Pressbleche oder Endlosbänder mit zumindest einer Kantenlänge von mehr als einem Meter muss diese Auflageeinrichtung großformatig ausgebildet sein und eine ebene Auflage der Pressbleche bzw. Endlosbänder ermöglichen. Mithilfe einer Schlittenführung wird die Bewegung des Bearbeitungskopfes in einer durch eine x- und y-Koordinate aufgespannten Ebene ermöglicht, wobei unabhängige Antriebselemente zum Anfahren der Position vorgesehen sind. Über eine Steuereinheit, welche die digitalisierten Daten einzelner 2D-Schichten der 3D-Topografie zugeleitet werden, erfolgt hierbei die Führung, Positionierung und Steuerung des Bearbeitungskopfes bzw. des Arbeitstisches, wenn der Bearbeitungskopf fest positioniert ist. Der hierbei verwendete Bearbeitungskopf dient dazu, das verwendete Schichtmaterial in Pulverform, pastöser, gasförmiger oder flüssiger Form zu verfestigen.

In weiterer Ausgestaltung des Vorrichtungsanspruches ist vorgesehen, dass ein oder mehrere Bearbeitungsköpfe in einer Koordinatenrichtung in der Ebene angeordnet und gemeinsam in Richtung der weiteren Koordinate verfahrbar sind. Die Bearbeitungsköpfe können hierbei in einem Abstand von 1 cm bis 20 cm gegenüber der Oberfläche angeordnet sein, wobei eine Fläche mit einer Kantenlänge von 10 cm bis 100 cm, vorzugsweise 50 cm, durch einen Bearbeitungskopf bearbeitet werden kann.

In weiterer Ausgestaltung des Vorrichtungsanspruches ist vorgesehen, dass die Auflageeinrichtung eine ebene Planfläche aufweist, welche in eine Vielzahl von Teilflächen unterteilt ist und innerhalb der Teilflächen über Ansaugöffnungen für eine Vakuumansaugeinrichtung verfügt. Mithilfe der Vakuumansaugeinrichtung wird das Pressblech oder Endlosband angesaugt, sodass dieses auf der Auflageeinrichtung plan aufliegen kann und für die weiteren Bearbeitungsschritte durch den Bearbeitungskopf, in einer festen Position gehalten wird, um Verschiebungen der Pressbleche oder Endlosbänder zur Oberflächenstrukturierung durch einen Versatz zu vermeiden.

Die fertig gestellten Pressbleche oder Endlosbänder können, wie bereits zum Verfahren erwähnt, nach erfolgter Strukturierung weiteren Behandlungsverfahren unterzogen werden. Beispielsweise können mehrere Chromschichten mit unterschiedlichen Glanzgraden aufgetragen werden, wobei zunächst eine vollflächige Verchromung erfolgt und entweder die erhabenen oder die tieferliegenden Bereiche der Oberflächenstrukturierung mit einer Maske abgedeckt werden, um im Anschluss zumindest eine zweite Verchromungsschicht aufzutragen. Alternativ besteht die Möglichkeit, den Glanzgrad durch Glanzbäder, mechanische Nachbehandlung oder Oberflächenätzung zu beeinflussen. Nach Beendigung dieser weiteren Verfahrensschritte ist das Pressblech oder Endlosband fertiggestellt und für den vorgesehenen Einsatzzweck verwendbar.

Die mithilfe des dreidimensionalen Schichtaufbaus hergestellte Oberflächenstrukturierung der Presswerkzeuge, insbesondere eines metallischen Pressbleches oder Endlosbandes, sind dafür vorgesehen, dass diese zum Verpressen und/oder Prägen von Werkstoffplatten, Kunststofffolien, Trennfolien, PVC-Oberflächen, LVT (luxury vinyl tiles), Scheckkarten, Pässe, Kreditkarten oder Plastikkarten eingesetzt werden, wobei durch den Pressvorgang eine naturgetreue Oberflächenstruktur bis zu einer Tiefe von 500 µm erhalten wird, und wobei zur Strukturierung der Oberfläche des Presswerkzeugs für die Ansteuerung der x- und y-Koordinate digitalisierte Daten einer 2D-Schicht einer 3D-Topografie einer Oberflächenstruktur verwendet werden, und wobei die Oberfläche partiell bearbeitet und eine Reproduktion einer vorbestimmten 3D-Topografie einer Oberflächenstruktur oder deren Negativ auf der Oberfläche des Presswerkzeugs durch Auftragen eines Schichtmaterials erfolgt.

Bei einer vorteilhaften Ausgestaltung des erfindungsgemäßen Verfahrens werden digitalisierte Daten einer 3D-Topographie einer Oberflächenstruktur von natürlich gewachsenen Rohstoffen, wie beispielsweise Holzoberflächen oder natürliche Mineralien, wie insbesondere Natursteinoberflächen, oder künstlich hergestellte Strukturen, wie beispielsweise keramische Oberflächen, als Vorlage verwendet. Die digitalisierten Daten können beispielsweise mithilfe eines Scanners erfasst werden, welcher mithilfe umlenkbarer Spiegeltechnik die gesamte 3D-Topographie einer Oberflächenstruktur naturgetreu erfasst oder durch Abtasten der gesamten 3D-Topographie einer Oberflächenstruktur einer Vorlage mithilfe eines durch zumindest einen Spiegel umgelenkten Laserstrahls und der hieraus erhaltenen Reflektionen erfasst. Bevorzugt kann ein 3D-Mikroskop mit einer verbesserten Tiefenauflösung verwendet werden. Zur Oberflächenstrukturierung können ferner die digitalisierten Daten von Graustufenbildern einer Oberflächenstruktur verwendet werden. Dabei wird die Farbskala zwischen Weiß und Schwarz in eine gewünschte Anzahl von Intervallen unterteilt. Anschließend wird jedem Intervall ein Zahlenwert zugeordnet. Dem Intervall, das der Farbe Weiß entspricht oder dem Intervall, das der Farbe Schwarz entspricht, wird die Zahl Null zugeordnet. Die Intervalle werden dann bis zum gegenüberliegenden Ende der Farbskala fortlaufend durchnummeriert. Die z-Koordinate kann die den Intervallen entsprechenden Zahlenwerte oder beliebige Vielfache davon annehmen und zur Fertigung der 2D-Schichten verwendet werden.

Der besondere Vorteil der vorliegenden Erfindung besteht darin, dass einfache Trägerkörper, beispielsweise Stahlbleche, verwendet werden, auf die ein dreidimensionaler Schichtaufbau zur Oberflächenstrukturierung entweder aufpolymerisiert oder aufgesintert wird. Hierdurch sind aufwändige Ätzverfahren mit vorherigem Auftragen eines Ätzresists (Maske) entbehrlich. Dieses Verfahren zeichnet sich somit als äußerst umweltfreundliches Verfahren aus, auch wenn gegebenenfalls zum Finish das Auftragen von weiteren Metallschichten, insbesondere Hartchromschichten, vorgesehen ist.

Die Erfindung wird im Weiteren anhand der Figuren näher erläutert.

Es zeigt
- Fig. 1: in einer Draufsicht ein Pressblech mit einer Oberflächenstrukturierung,
- Fig. 2: in einer stark vergrößerten Detailansicht den Schichtenaufbau der Oberflächenstrukturierung des Pressbleches gemäß Figur 1, und
- Fig. 3: in einer Draufsicht eine schematische Ansicht einer Vorrichtung zur Herstellung der Pressbleche.

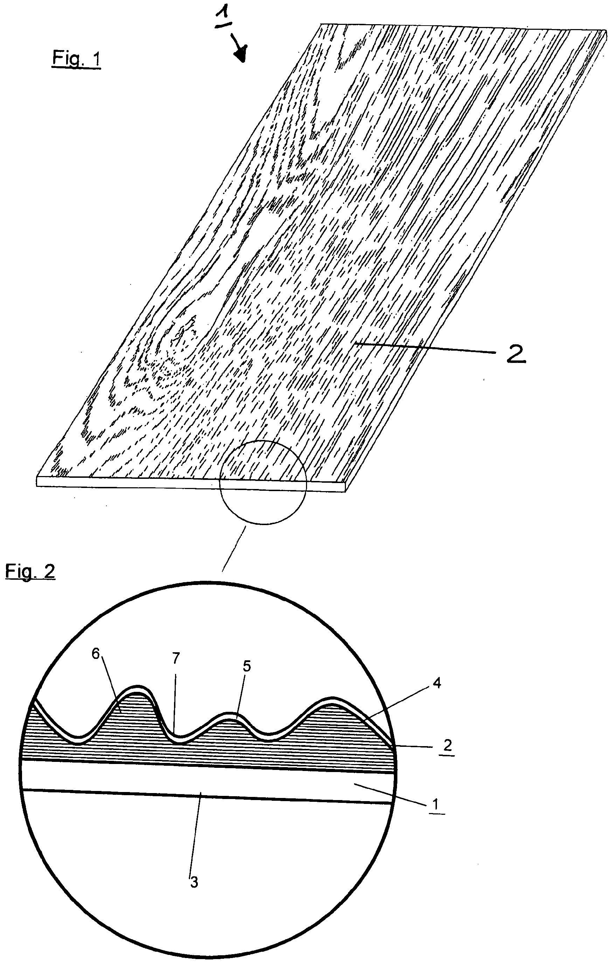

Figur 1 zeigt in einer perspektivischen Darstellung ein Pressblech 1, welches zur Herstellung von Werkstoffplatten eingesetzt werden kann. Im gezeigten Ausführungsbeispiel besitzt das Pressblech 1 eine Oberflächenstrukturierung 2, die einer Holzmaserung entspricht. Das Pressblech 1 wurde nach dem erfindungsgemäßen Verfahren unter Verwendung von digitalisierten Daten einer 3D-Topografie hergestellt, bei dem die Strukturierungen durch Auftragen von einer Vielzahl von einzelnen 2D-Schichten hergestellt wurden. Nach Abschluss der Oberflächenstrukturierung wird entweder vollflächig oder partiell eine, gegebenenfalls auch mehrere Chromschichten aufgetragen. Damit ist das Pressblech 1 zur Verpressung von Werkstoffplatten verwendbar.

Figur 2 zeigt in einer stark vergrößerten Darstellung den Querschnitt des Pressbleches 1 mit Oberflächenstrukturierung 2. Auf eine Trägerblech 3 sind hierbei eine Vielzahl von einzelnen Schichten 4 aufgetragen, die in ihrer Formgebung der gewünschten Oberflächenstrukturierung entsprechen. Die einzelnen Schichten 4 werden mithilfe eines Bearbeitungskopfes verfestigt und im Anschluss mit einer Chromschicht 5 versehen. Alternativ können mehrere Chromschichten verwendet werden, die beispielsweise auf den Erhebungen 6, bzw. tieferliegenden Bereichen 7 unterschiedliche Glanzgrade entstehen lassen.

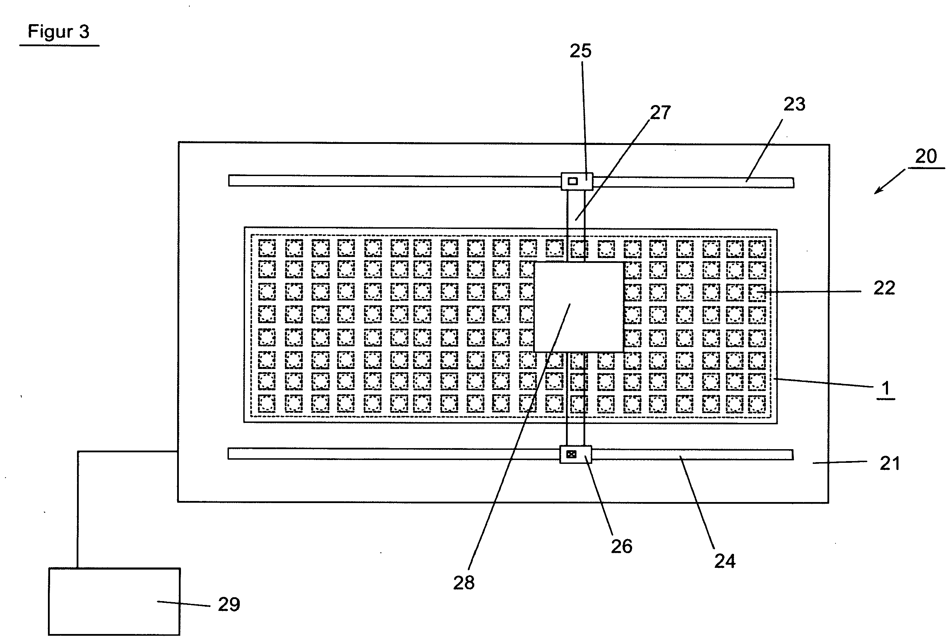

Figur 3 zeigt in einer Draufsicht eine Vorrichtung 20, die zur Herstellung der Oberflächenstrukturierung eines Pressbleches 1 vorgesehen ist. Das Pressblech 1 wird auf einem Arbeitstisch 21 gelagert, welcher mit einer Vielzahl von trichterförmigen Vertiefungen 22 ausgestattet ist, die an eine Vakuumpumpe angeschlossen sind, sodass das Pressblech 1 nahezu vollständig eben auf dem Arbeitstisch 21 fixiert werden kann. Entlang des Pressbleches 1 sind Führungsschienen 23, 24 angeordnet, auf denen Gleitführungen 25, 26 verfahrbar angeordnet sind, wobei die Gleitführungen 25, 26 jeweils über einen Antriebsmotor verfügen. Die Gleitführungen 25, 26 sind über eine Traverse 27 miteinander verbunden, welche zur Aufnahme eines Bearbeitungskopfes 28 vorgesehen ist. Der Bearbeitungskopf 28 ist ebenfalls über Antriebsmotoren quer zur Längserstreckung der Führungsschienen 23, 24 bewegbar, sodass der Bearbeitungskopf 28 jede Position oberhalb des Pressbleches 1 erreichen kann. Bei dem Bearbeitungskopf 28 handelt es sich gemäß der vorliegenden Erfindung um einen elektromagnetische Strahlung erzeugenden Bearbeitungskopf 28 oder einen Elektronenstrahl aussendenden Bearbeitungskopf 28, mit dessen Hilfe die gewünschte Oberflächenstrukturierung des Pressbleches 1 vorgenommen wird. Hierzu werden eine Vielzahl von einzelnen Schichten übereinander aufgetragen, und gemäß dem vorliegenden erfindungsgemäßen Verfahren verfestigt, sodass die Schichten auf dem Trägermaterial 3 des Pressbleches 1 anhaften und nach Abschluss mit einer Chromschicht überzogen werden können.

Der Bearbeitungskopf 28 wird hierbei zum Aufbringen der Schichten durch eine Steuereinheit 29 bewegt, die anhand der 3D-Topographie und der hieraus ermittelten digitalisierten 2D-Schichten den Bearbeitungskopf 28 in die gewünschte Position mithilfe der Antriebsmotoren der Gleitführung 25, 26 verfährt.

### Bezugszeichenaufstellung

- 1: Pressblech
- 2: Oberflächenstrukturierung
- 3: Trägermaterial
- 4: Schichten
- 5: Chromschicht
- 6: Erhebungen
- 7: tieferliegende Bereiche
- 20: Vorrichtung
- 21: Arbeitstisch
- 22: trichterförmige Vertiefungen
- 23: Führungsschiene
- 24: Führungsschiene
- 25: Gleitführung
- 26: Gleitführung
- 27: Traverse
- 28: Bearbeitungskopf
- 29: Steuereinheit

## Patentansprüche

1. Verfahren zur Herstellung einer Oberflächenstruktur (2) eines großformatigen Presswerkzeuges mit zumindest einer Kantenlänge von mehr als einem Meter, insbesondere Pressblech (1) oder Endlosband, zum Verpressen von Werkstoffplatten, Kunststofffolien, Trennfolien, PVC-Oberflächen und LVT (luxury vinyl tiles), Scheckkarten, Pässe, Kreditkarten oder Plastikkarten, umfassend zumindest die Schritte:
- Bereitstellung und Verwendung von digitalisierten Daten einer 3D- Topografie einer Oberflächenstruktur (2),
- Erstellen von digitalisierten Daten einzelner 2D-Schichten (4) der 3D- Topografie,
- Verwendung der digitalisierten Daten der 2D-Schichten (4), um einen Bearbeitungskopf (28) zu führen und/oder in einer xy-Ebene zu positionieren, oder zur Nachführung eines Arbeitstisches (21) in der durch eine x- und y- Koordinate aufgespannten Ebene gegenüber einem ortsfest gehaltenen Bearbeitungskopf (28), um ein Schichtmaterial mit einem vorhandenen Trägermaterial (3) oder einer bereits fertiggestellten Schicht in Abhängigkeit der digitalisierten Daten der 2D-Schichten (4) zu verbinden,
wobei die Oberflächenstruktur (2) unabhängig eines sich wiederholenden Rapports in Teilbereiche unterteilt wird, welche jeweils sequenziell bearbeitet werden oder zumindest teilweise von mehreren Bearbeitungsköpfen parallel bearbeitet werden, und/oder dass die Grenzen der Teilbereiche freiwählbar sind und/oder dass die festgelegten Teilbereiche in Abhängigkeit des verwendeten Bearbeitungskopfes (28) eine Kantenlänge von 10 cm bis 100 cm aufweisen.

2. Verfahren nach Anspruch 1, **dadurch gekennzeichnet, dass** das Schichtmaterial in fester, flüssiger, pastöser, gasförmiger oder pulverförmiger Form verwendet wird.

3. Verfahren nach Anspruch 1 oder 2, **dadurch gekennzeichnet, dass** der Bearbeitungskopf (28) zur Erzeugung von elektromagnetischer Strahlung vorgesehen ist, wobei insbesondere Infrarotstrahlung oder Laserlicht mit einer oder zwei Wellenlängen verwendet wird, und/oder dass der Bearbeitungskopf (28) einen Elektronenstrahl aussendet,

4. Verfahren nach einem der Ansprüche 1 , 2 oder 3, **dadurch gekennzeichnet, dass** die Nachführung des Bearbeitungskopfes (28) in einem Abstand von 1 cm bis 20 cm gegenüber der Oberfläche erfolgt, und/oder dass der Bearbeitungskopf (28) in Abhängigkeit einer sich ergebenden Abstandsänderung zwischen Oberfläche und Bearbeitungskopf (28) nachgeführt wird.

5. Verfahren nach einem der Ansprüche 1 bis 4, **dadurch gekennzeichnet, dass** die Verwendung von digitalisierten Daten einer Oberflächenstruktur (2) von natürlich gewachsenen Rohstoffen, wie beispielsweise Holzoberflächen, oder natürlicher Mineralien, insbesondere Natursteinoberflächen, oder künstlich hergestellter Strukturen, beispielsweise keramische Oberflächen, zugrunde gelegt wird, und/oder dass die digitalisierten Daten deckungskonform zu einer Dekorlage sind.

6. Verfahren nach einem der Ansprüche 1 bis 5, **dadurch gekennzeichnet, dass** die Verwendung eines 3D-Scanners zur Erfassung der Oberflächenstruktur (2) und Berechnung von digitalisierten Daten zur Festlegung einer 3D-Topografie, welcher mithilfe umlenkbarer Spiegel die gesamte Oberfläche der Vorlagen naturgetreu scannt, oder durch Abtasten der gesamten Oberflächenstruktur (2) mithilfe eines durch zumindest einen Spiegel umgelenkten Laserstrahl und der hieraus erhaltenen Reflektionen erfasst, oder eines 3D-Mikroskops oder durch die Verwendung von Graustufenabbildung einer Oberflächenstruktur (2).

7. Verfahren nach einem der Ansprüche 1 bis 6, **dadurch gekennzeichnet, dass** eine Konvertierung der digitalen 3D-Daten, insbesondere durch Interpolation und Datenreduktion zur Ermittlung der digitalisierten Daten der 2D-Schichten (4) und Steuerung des Bearbeitungskopfes (28) vorgenommen wird.

8. Verfahren nach einem der Ansprüche 1 bis 7, **dadurch gekennzeichnet, dass** die Grenzen der Teilbereiche in der Art festgelegt werden, dass die Grenzen mit unbearbeiteten Bereichen der Oberfläche zusammenfallen, und/oder dass die festgelegten Teilbereiche in Abhängigkeit des verwendeten Bearbeitungskopfes (28) eine Kantenlänge von 50 cm aufweisen.

9. Verfahren nach einem der Ansprüche 1 bis 8, **dadurch gekennzeichnet, dass** das Schichtmaterial aus einem Metallpulver, wie Titan besteht, welches gesintert wird, und/oder dass das Schichtmaterial aus einem flüssigen oder pastösen Kunststoff oder Harz, besteht, welches polymerisiert wird, und/oder dass das Schichtmaterial aus einer gasförmigen Substanz besteht, welche verfestigt wird, und/oder dass das Schichtmaterial aus einem Ein- oder Mehrkomponentenpulver besteht, welches durch einen Binder oder Härter verfestigt, polymerisiert oder aufgeschmolzen wird, und/oder dass das Schichtmaterial aus einer Folie besteht, welche teilweise polymerisiert wird.

10. Verfahren nach einem der Ansprüche 1 bis 9, **dadurch gekennzeichnet, dass** die Strahlen eines Lasers oder eines Elektronenstrahls einer Elektronenstrahlquelle unter einem Winkel zur Senkrechten (z-Koordinate) auf die Oberfläche auftreffen, und/oder dass eine Fokussierung des Laser- oder Elektronenstrahls auf einen Durchmesser von 2 bis 10 nm erfolgt.

11. Verfahren nach einem der Ansprüche 1 bis 10, **dadurch gekennzeichnet, dass** auf der Oberfläche Messpunkte vorgesehen sind, welche eine jederzeitige Kontrolle der Position des Bearbeitungskopfes (28) erlauben, sodass eine Korrektursteuerung erfolgen kann.

12. Vorrichtung (20) zur Anwendung des Verfahrens nach einem der Ansprüche 1 bis 11, umfassend zumindest eine Auflageeinrichtung für die zu bearbeitenden Materialien, zumindest einen Bearbeitungskopf (28) und eine Schlittenführung zur Führung und/oder Bewegung des Bearbeitungskopfes (28) in eine beliebige Position oder Nachführung eines Arbeitstisches (21) innerhalb einer durch eine x- und y-Koordinate aufgespannten Ebene, sowie unabhängige Antriebselemente zum Anfahren der Position und einer Steuereinheit (29), welche zur Führung, Positionierung und Steuerung des Bearbeitungskopfes (28) oder des Arbeitstisches (21) vorgesehen ist, **dadurch gekennzeichnet, dass** die Vorrichtung (20) dazu ausgelegt ist, dass die Ansteuerung der x- und y-Koordinaten durch die digitalisierten Daten einzelner 2D-Schichten (4) der 3D-Topografie erfolgt und dass die Vorrichtung (20) dazu ausgelegt ist, dass mithilfe des wenigstens einen Bearbeitungskopfes (28) das verwendete Schichtmaterial verfestigt wird, wobei die Vorrichtung (20) zusätzlich dazu ausgelegt ist, die Oberflächenstruktur (2) unabhängig eines sich wiederholenden Rapports in Teilbereiche zu unterteilen und diese jeweils sequenziell zu bearbeiten oder zumindest teilweise von mehreren Bearbeitungsköpfen parallel zu bearbeiten, und/oder dass die Vorrichtung dazu ausgelegt ist, dass die Grenzen der Teilbereiche freiwählbar sind und/oder dass die Vorrichtung dazu ausgelegt ist, dass die festgelegten Teilbereiche in Abhängigkeit des verwendeten Bearbeitungskopfes (28) eine Kantenlänge von 10 cm bis 100 cm aufweisen.

13. Vorrichtung (20) nach Anspruch 12, **dadurch gekennzeichnet, dass** ein oder mehrere Bearbeitungsköpfe in einer Koordinatenrichtung in der Ebene angeordnet und gemeinsam in Richtung der weiteren Koordinate verfahrbar sind, und/oder dass die Bearbeitungsköpfe in einem Abstand von 1 cm bis 20 cm gegenüber der Oberfläche angeordnet sind und eine Fläche mit einer Kantenlänge von 10 cm bis 100 cm oder vorzugsweise 50 cm bearbeiten.

14. Vorrichtung (20) nach Anspruch 12 oder 13, **dadurch gekennzeichnet, dass** die Auflageeinrichtung eine ebene Planfläche aufweist, welche in eine Vielzahl von Teilflächen unterteilt ist und innerhalb der Teilflächen über Ansaugöffnungen für eine Vakuumansaugeinrichtung verfügt, und/oder dass der Bearbeitungskopf (28) eine Infrarotlampe, eine UV-Lampe, einen Laser oder eine Elektronenstrahlquelle umfasst.

## Claims

1. A method for producing a surface structure (2) of a large-format pressing tool with at least one edge length amounting to more than one meter, in particular a press plate (1) or an endless belt, for pressing material sheets, plastic films, separating films, PVC surfaces and LVTs (luxury vinyl tiles), check cards, passports, credit cards or plastic cards, comprising at least the steps:
- providing and using digitized data of a 3D topography of a surface structure (2),
- generating digitized data of individual 2D layers (4) of the 3D topography,
- using the digitized data of the 2D layers (4) in order to guide a processing head (28) and/or to position it in an x-y plane, or to track a work table (21) in the plane spanned by an x- and a y-coordinate relative to a processing head (28) which is held stationary, in order to connect a layer material to an existing carrier material (3) or an already completed layer as a function of the digitized data of the 2D layers (4),
wherein the surface structure (2) is subdivided, independently of a repeating pattern, into subregions which are each processed sequentially or are at least partially processed in parallel by several processing heads, and/or that the boundaries of the subregions are freely selectable and/or in that the defined subregions have an edge length amounting to 10 cm to 100 cm depending on the processing head (28) that is used.

2. The method according to claim 1, **characterized in that** the layer material is used in solid, liquid, paste, gaseous or powder form.

3. The method according to claim 1 or 2, **characterized in that** the processing head (28) is provided for generating electromagnetic radiation, wherein in particular infrared radiation or laser light with one or two wavelengths is used and/or that the processing head (28) emits an electron beam.

4. The method according to one of claims 1, 2 or 3, **characterized in that** the processing head (28) is tracked at a distance of 1 cm to 20 cm with respect to the surface, and/or the processing head (28) is tracked as a function of a change in distance occurring between the surface and processing head (28).

5. The method according to one of claims 1 to 4, **characterized in that** the use of digitized data of a surface structure (2) of naturally grown raw materials such as, for example, wood surfaces, or natural minerals, in particular natural stone surfaces, or synthetically produced structures, for example ceramic surfaces are taken as a basis, and/or the digitized data is congruent with a decorative layer.

6. The method according to one of claims 1 to 5, **characterized in that** in order to set up a 3D topography, a 3D scanner is used to detect the surface structure (2) and compute digitized data which realistically scans the entire surface of the templates by means of deflectable mirrors, or the entire surface structure (2) is scanned by means of a laser beam deflected by means of at least one mirror and the resulting reflections are detected, or a 3D microscope is used or a gray scale image of a surface structure (2) is used.

7. The method according to one of claims 1 to 6, **characterized in that** a conversion, in particular by interpolation and data reduction, of the digitized 3D data is carried out in order to obtain the digitized data of the 2D layers (4) and control the processing head (28).

8. The method according to one of claims 1 to 7, **characterized in that** the boundaries of the subregions are set such that the boundaries coincide with unprocessed regions of the surface, and/or the set subregions have an edge length of 50 cm, depending on the processing head (28) used.

9. The method according to one of claims 1 to 8, **characterized in that** the layer material is a metal powder such as titanium which is sintered and/or the layer material is a liquid or pasty plastic material or resin which is polymerized and/or the layer material is a gaseous substance which is solidified and/or the layer material is a single-component or multicomponent powder which is solidified, polymerized or melted by means of a binding agent or curing agent and/or the layer material is a film which is partially polymerized.

10. The method according to one of claims 1 to 9, **characterized in that** the beams of a laser or an electron beam of an electron beam source hit the surface at an angle to the vertical (z-coordinate) and/or the laser beam or electron beam is focused on a diameter of 2 to 10 nm.

11. The method according to one of claims 1 to 10, **characterized in that** measurement points are provided on the surface enabling the position of the processing head (28) to be checked at any time so that a correction control can be applied.

12. A device (20) for implementing the method according to one of claims 1 to 11, comprising at least one supporting means for the materials to be processed, at least one processing head (28) and a guide carriage for guiding and/or moving the processing head (28) into any position or tracking a work table (21) within a plane spanned by an x- and a y-coordinate, as well as independent drive elements for moving into position and a control unit (29) provided as a means of guiding, positioning and controlling the processing head (28) or the work table (21), **characterized in that** the device (20) is configured so that the x- and y-coordinates are controlled on the basis of the digitized data of individual 2D layers (4) of the 3D topography and the device (20) is configured so that the layer material used is solidified by means of the at least one processing head (28), wherein the device (20) is additionally configured to subdivide the surface structure (2), independently of a repeating pattern, into subregions which are each processed sequentially or are at least partially processed in parallel by several processing heads, and/or that the boundaries of the subregions are freely selectable and/or **in that** the defined subregions have an edge length amounting to 10 cm to 100 cm depending on the processing head (28) that is used.

13. The device (20) according to claim 12, **characterized in that** one or more processing heads are disposed in one coordinate direction in the plane and can be moved jointly in the direction of the further coordinate and/or the processing heads are disposed at a distance of 1 cm to 20 cm from the surface and process an area with an edge length of 10 cm to 100 cm or preferably 50 cm.

14. The device (20) according to claim 12 or 13, **characterized in that** the supporting means has a flat planar surface divided into a plurality of partial surfaces and is provided with suction orifices for a vacuum suction system within the partial surfaces and/or the processing head (28) comprises an infrared lamp, a UV lamp, a laser or an electron beam source.

## Revendications

1. Procédé de fabrication d'une structure de surface (2) d'un outil de presse grand format ayant au moins une longueur d'arête de plus d'un mètre, en particulier tôle de presse (1) ou bande sans fin, pour le pressage de plaques de matériau, de films de matière plastique, de films de séparation, de surfaces en PVC et de LVT (luxury vinyl tiles), de cartes bancaires, de passeports, de cartes de crédit ou de cartes en plastique, comprenant au moins les étapes suivantes :
- fourniture et utilisation de données numérisées d'une topographie 3D d'une structure de surface (2),
- création de données numérisées de couches 2D (4) individuelles (4) de la topographie 3D,
- utilisation des données numérisées des couches 2D (4) pour guider une tête d'usinage (28) et/ou la positionner dans un plan xy, ou pour l'asservissement d'une table de travail (21) dans le plan défini par une coordonnée x et y par rapport à une tête d'usinage (28) retenue de façon stationnaire afin de raccorder un matériau en couche à un matériau support (3) existant ou à une couche déjà finie en fonction des données numérisées des couches 2D (4),
la structure de surface (2) étant, indépendamment d'un rapport répétitif, divisée en zones partielles, lesquelles sont usinées respectivement séquentiellement ou sont usinées en parallèle au moins partiellement par plusieurs têtes d'usinage, et/ou les limites des zones partielles pouvant être choisies librement et/ou les zones partielles stipulées présentant, en fonction de la tête d'usinage (28) utilisée, une longueur d'arête de 10 cm à 100 cm.

2. Procédé selon la revendication 1, **caractérisé en ce que** le matériau en couche est utilisé sous forme solide, liquide, pâteuse, gazeuse ou pulvérulente.

3. Procédé selon la revendication 1 ou 2, **caractérisé en ce que** la tête d'usinage (28) est prévue pour la production d'un rayonnement électromagnétique, en particulier un rayonnement infrarouge ou une lumière laser ayant une ou deux longueurs d'ondes étant utilisé(e), et/ou **en ce que** la tête d'usinage (28) émet un faisceau d'électrons.

4. Procédé selon l'une des revendications 1, 2 ou 3, **caractérisé en ce que** l'asservissement de la tête d'usinage (28) s'effectue à une distance de 1 cm à 20 cm par rapport à la surface, et/ou **en ce que** la tête d'usinage (28) est asservie en fonction d'une variation de distance résultante entre la surface et la tête d'usinage (28).

5. Procédé selon l'une des revendications 1 à 4, **caractérisé en ce que** l'utilisation de données numérisées est fondée sur une structure de surface (2) de matières premières à croissance naturelle, comme par exemple des surfaces en bois, ou de minéraux naturels, en particulier de surfaces de pierres naturelles, ou de structures fabriquées artificiellement, par exemples des surfaces céramiques, et/ou **en ce que** les données numérisées sont en conformité de recouvrement avec une couche décorative.

6. Procédé selon l'une des revendications 1 à 5, **caractérisé par** l'utilisation d'un scanner 3D pour la détection de la structure de surface (2) et le calcul de données numérisées pour l'établissement d'une topographie 3D, lequel scanne de façon réaliste, à l'aide de miroirs pouvant être déviés, la totalité de la surface des modèles, ou par l'exploration de la totalité de la structure de surface (2) à l'aide d'un faisceau laser dévié par au moins un miroir et des réflexions ainsi obtenues, ou d'un microscope 3D, ou par l'utilisation de la représentation en niveaux de gris d'une structure de surface (2).

7. Procédé selon l'une des revendications 1 à 6, **caractérisé en ce qu'**une conversion des données 3D numériques est effectuée, en particulier par l'interpolation et la réduction de données pour la détermination des données numérisées des couches 2D (4) et la commande de la tête d'usinage (28).

8. Procédé selon l'une des revendications 1 à 7, **caractérisé en ce que** les limites des zones partielles sont fixées de telle sorte que les limites coïncident avec des zones non usinées de la surface, et/ou **en ce que** les zones partielles fixées comportent une longueur d'arête de 50 cm en fonction de la tête d'usinage (28) utilisée.

9. Procédé selon l'une des revendications 1 à 8, **caractérisé en ce que** le matériau en couche se compose d'une poudre métallique, comme du titane, laquelle est frittée, et/ou **en ce que** le matériau en couche se compose d'une matière plastique ou résine liquide ou pâteuse, laquelle est polymérisée, et/ou **en ce que** le matériau en couche se compose d'une substance gazeuse, laquelle est solidifiée, et/ou **en ce que** le matériau en couche se compose d'une poudre à un ou plusieurs composants, laquelle est solidifiée par un liant ou un durcisseur, polymérisée ou fondue, et/ou **en ce que** le matériau en couche se compose d'un film, lequel est partiellement polymérisé.

10. Procédé selon l'une des revendications 1 à 9, **caractérisé en ce que** les faisceaux d'un laser ou d'un faisceau d'électrons d'une source de faisceaux d'électrons impactent la surface en formant un angle avec la verticale (coordonnée z), et/ou **en ce qu'**une concentration du faisceau laser ou du faisceau d'électrons s'effectue à un diamètre de 2 à 10 nm.

11. Procédé selon l'une des revendications 1 à 10, **caractérisé en ce que**, sur la surface, il est prévu des points de mesure, lesquels permettent un contrôle permanent de la position de la tête d'usinage (28), grâce à quoi une commande de correction peut être effectuée.

12. Dispositif (20) destiné à l'utilisation du procédé selon l'une des revendications 1 à 11, comprenant au moins un dispositif d'appui pour les matériaux à usiner, au moins une tête d'usinage (28) et un guidage de chariot pour le guidage et/ou le mouvement de la tête d'usinage (28) dans une position quelconque ou l'asservissement d'une table de travail (21) à l'intérieur d'un plan défini par une coordonnée x et y, ainsi que des éléments d'entraînement indépendants pour l'abordage de la position et d'une unité de commande (29), laquelle est prévue pour le guidage, le positionnement et la commande de la tête d'usinage (28) ou de la table de travail (21), **caractérisé en ce que** le dispositif (20) est conçu pour que le pilotage des coordonnées x et y s'effectue par les données numérisées de couches 2D (4) individuelles de la topographie 3D, et **en ce que** le dispositif (20) est conçu pour que, à l'aide de la tête d'usinage (28) au moins au nombre de un, le matériau en couche utilisé soit solidifié, le dispositif (20) étant en plus conçu pour, indépendamment d'un rapport répétitif, diviser la structure de surface (2) en zones partielles et pour usiner celles-ci respectivement séquentiellement ou en parallèle au moins partiellement avec plusieurs têtes d'usinage, et/ou **en ce que** le dispositif est conçu pour que les limites des zones partielles puissent être choisies librement et/ou **en ce que** le dispositif est conçu pour que les zones partielles stipulées présentent, en fonction de la tête d'usinage (28) utilisée, une longueur d'arête de 10 cm à 100 cm.

13. Dispositif (20) selon la revendication 12, **caractérisé en ce qu'**une ou plusieurs têtes d'usinage sont disposées dans une direction de coordonnée dans le plan et peuvent être déplacées conjointement en direction de l'autre coordonnée, et/ou **en ce que** les têtes d'usinage sont disposées à une distance de 1 cm à 20 cm par rapport à la surface et traient une surface, et usinent une longueur d'arête de 10 cm à 100 cm, ou de préférence de 50 cm.

14. Dispositif (20) selon la revendication 12 ou 13, **caractérisé en ce que** le dispositif d'appui comporte une surface plane plate, laquelle est divisée en une multiplicité de surfaces partielles et dispose, à l'intérieur des surfaces partielles, d'ouvertures d'aspiration pour un dispositif de générateur de vide, et/ou **en ce que** la tête d'usinage (28) comprend une lampe infrarouge, une lampe UV, un laser ou une source de faisceaux d'électrons.
